# FASCICULE DE BREVET EUROPEEN

(11) **EP 0 429 361 B1**
(45) Date de publication et mention de la délivrance du brevet: **30.03.1994**
(21) Numéro de dépôt: 90403286.9
(22) Date de dépôt: 21.11.1990
(51) Int. Cl.: B60J 10/12

(54) **Panneau de toit ouvrant pour véhicule automobile, et procédé de fabrication de ce panneau**
Schiebedachdeckel für Kraftfahrzeuge und dessen Herstellungsverfahren
Vehicle sunroof panel and method of its manufacturing

(30) Priorité: 22.11.1989 FR 8915310
(43) Date de publication de la demande: 29.05.1991
(73) Titulaire: HUTCHINSON, F-75008 Paris (FR)
(72) Inventeur: Nivert, Chantal, F-86140 Lencloitre (FR)
(74) Mandataire: Ramey, Daniel

(56) Documents cités:
- EP-A- 0 296 974
- DE-A- 3 441 776
- DE-A- 3 630 461
- DE-C- 3 738 400
- FR-A- 2 511 640
- GB-A- 2 171 442

## Description

L'invention concerne un panneau de toit ouvrant pour véhicule automobile, ainsi qu'un procédé de fabrication de ce panneau.

Les panneaux de toit ouvrant pour véhicule automobile sont le plus souvent constitués d'une plaque de verre, sur la face inférieure de laquelle est rapporté un cadre périphérique qui permet de rigidifier la plaque de verre et qui sert également de support à des mécanismes associés au panneau de toit ouvrant. Ce cadre métallique est fixé sur la plaque de verre par des cordons de colle, et un joint d'étanchéité en caoutchouc ou en élastomère est rapporté et éventuellement collé sur la périphérie de la plaque de verre.

Ces panneaux connus de toit ouvrant présentent plusieurs inconvénients :
- il faut protéger contre les ultra-violets les cordons de colle qui fixent le cadre métallique et le joint d'étanchéité sur la plaque de verre. Pour cela, on dépose sur la face inférieure de la plaque de verre, à sa périphérie, une couche d'émail qui provoque elle-même des problèmes de collage, ce qui amène à utiliser des colles spéciales,
- le joint d'étanchéité rapporté sur la périphérie de la plaque de verre est en légère saillie par rapport à la face supérieure de celle-ci, ce qui n'est pas souhaitable,
- la fabrication du cadre métallique fait appel à un outillage spécifique, relativement coûteux.

Par le document GB-A-2 171 442, on connaît un panneau de toit ouvrant comprenant une plaque de verre, un cadre métallique de rigidification, un cadre périphérique en matière plastique qui est surmoulé sur le bord de la plaque de verre et du cadre métallique de rigidification, et un joint d'étanchéité qui est monté par clipsage ou par surmoulage sur le cadre périphérique en matière plastique. Ce cadre périphérique en matière plastique permet d'éviter les inconvénients liés au collage du cadre métallique sur la plaque de verre, mais constitue un élément supplémentaire dont la fabrication augmente le prix de revient du panneau de toit ouvrant. En outre, il laisse subsister les inconvénients liés à la fabrication du cadre métallique de rigidification au moyen d'un outillage spécifique relativement coûteux.

La présente invention a notamment pour but d'éviter ou au moins de réduire les inconvénients précités, et notamment ceux liés au collage d'un cadre métallique sur une plaque de verre et à la fabrication de ce cadre métallique.

Elle propose à cet effet un panneau de toit ouvrant pour véhicule automobile, comprenant une plaque de matière transparente telle que du verre, un cadre de rigidification monté sur le pourtour de ladite plaque et un joint périphérique d'étanchéité, caractérisé en ce que le cadre de rigidification est réalisé en matériau composite et est intégré ou noyé dans le joint d'étanchéité, au moins l'un de ces deux éléments étant surmoulé sur la périphérie de ladite plaque de matière transparente.

Le surmoulage du joint d'étanchéité sur le cadre et sur la plaque permet d'éviter tous les problèmes particuliers liés au collage du cadre de rigidification sur la plaque de matière transparente. De plus, la réalisation du cadre de rigidification en matériau composite permet d'éviter les problèmes liés à la fabrication d'un cadre métallique par un outillage spécifique et coûteux.

Selon une autre caractéristique de l'invention, le cadre de rigidification en matériau composite est surmoulé sur la périphérie de la plaque en matière transparente.

Dans ce cas, le joint d'étanchéité peut être surmoulé sur la plaque de matière transparente et sur le cadre de rigidification, comme déjà indiqué, ou bien il peut être rapporté et éventuellement collé sur cette plaque et ce cadre.

L'invention propose également un procédé de fabrication d'un panneau de toit ouvrant pour véhicule automobile, caractérisé en ce qu'il consiste à disposer une ou plusieurs couches de tissu de fils ou de fibres sur la périphérie d'une plaque de matière transparente telle que du verre par exemple, à poser sur cette plaque et sur la ou les couches de tissu une feuille de matière plastique telle que du PVC, à faire le vide entre la plaque et la feuille, et à injecter une matière de synthèse du type thermodurcissable telle qu'une résine dans l'espace compris entre la feuille et la plaque au niveau de la ou des couches de tissu précité, pour ainsi former un cadre en matériau composite surmoulé sur la périphérie de la plaque.

Un tel procédé est avantageux, notamment pour la fabrication des panneaux de toit ouvrant en petite série, car il peut être exécuté avec une simple matrice de moulage et ne nécessite pas la fabrication d'un moule d'injection spécifique, toujours extrêmement coûteux.

L'invention sera mieux comprise et d'autres détails, caractéristiques et avantages de celle-ci apparaîtront plus clairement à la lecture de la description qui suit, faite à titre d'exemple en référence aux dessins annexés dans lesquels :
- la figure 1 est une vue schématique en coupe d'une partie d'un toit ouvrant d'un type connu;
- la figure 2 est une vue schématique partielle en coupe d'une première forme de réalisation de l'invention;
- les figures 3 et 4 sont des vues schématiques partielles en coupe de variantes de réalisation;
- la figure 5 illustre schématiquement le procédé de fabrication selon l'invention.

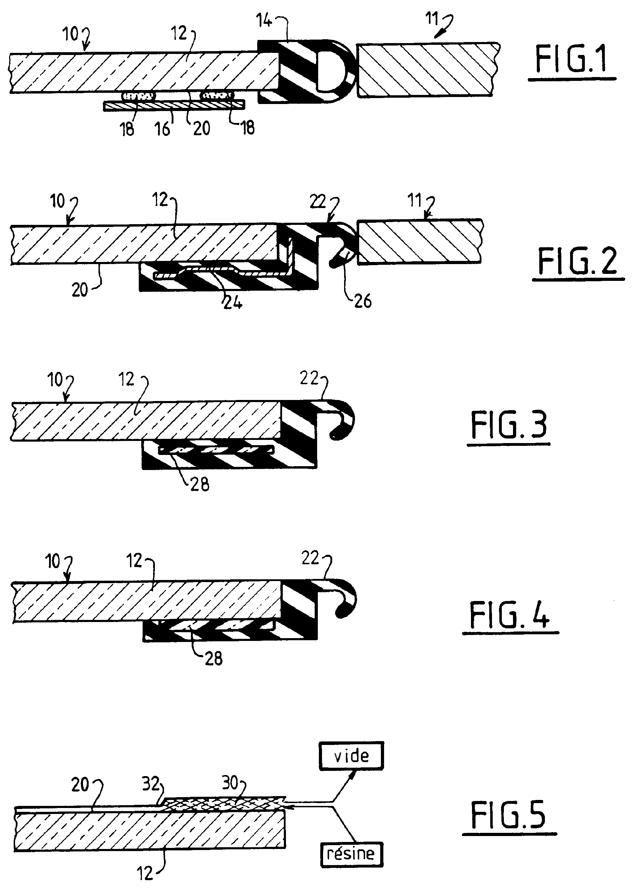

En figure 1, on a représenté une vue partielle en coupe d'un toit ouvrant connu dans la technique antérieure, comprenant un panneau 10 d'ouverture et de fermeture d'une baie formée dans le toit 11 d'un véhicule automobile.

Le panneau 10 comprend essentiellement une plaque 12 de matière transparente, en général de verre, sur la périphérie de laquelle est rapporté et collé un joint d'étanchéité 14, qui coopère avec la bordure de la baie formée dans le toit du véhicule.

Un cadre de rigidification 16, métallique, est fixé sur la face inférieure de la plaque 12, au moyen de cordons de colle 18. En général, le cadre de rigidification 16 comprend des nervures longitudinales, permettant d'augmenter sa rigidité.

La face inférieure 20 de la plaque 12 comporte en général une bande de matière de protection des cordons de colle 18 contre les ultra-violets, cette matière étant déposée par sérigraphie ou par émaillage. La colle utilisée pour la fixation du cadre 16 est une colle spéciale, adhérant fortement sur cette bande de protection.

On a représenté schématiquement dans la figure 2 une vue partielle en coupe d'une première forme de réalisation de l'invention.

Dans cette figure, le panneau de toit ouvrant 10 est constitué d'une plaque 12 de matière transparente, par exemple de verre, à la périphérie de laquelle est surmoulé un joint d'étanchéité 22 dans lequel est noyé un cadre métallique de rigidification 24. Pour plus de rigidité, ce cadre 24 s'étend, non seulement sur la face inférieure 20 de la plaque 12, mais également le long de sa tranche, sur une partie de l'épaisseur de la plaque 12. Le joint 22, réalisé par exemple en polyuréthane, est surmoulé sur toute la tranche de la plaque 12 et sur la face inférieure 20 de celle-ci, de façon à enrober complètement le cadre de rigidification 24, celui-ci étant disposé le plus près possible de la plaque 12.

A sa périphérie, le joint 22 est formé avec une lévre d'étanchéité 26, qui coopère avec la bordure de la baie formée dans le toit 11 du véhicule automobile. Cette lévre d'étanchéité 26 est recourbée vers le bas, comme on le voit en figure 2.

Pour que le joint 22 adhère fortement à la plaque de verre 12, il suffit de passer, sur les surfaces de celle-ci qui seront en contact avec le joint, une couche de primaire, par exemple de silane.

Grâce à cette forme de réalisation de l'invention, on évite tous les problèmes qui étaient liés auparavant au collage du cadre 16 sur la face inférieure de la plaque 12. En outre, le joint 22 vient affleurer la face supérieure de la plaque 12 et du toit 11 du véhicule, et n'est plus en saillie au-dessus de ces derniers.

Dans la forme de réalisation représentée en figure 3, la cadre de rigidification 28 qui est noyé dans le joint d'étanchéité 22 surmoulé sur la plaque 12, est en matériau composite et est sensiblement plan. Il est constitué de tissu de fils ou de fibres, par exemple de verre, de verre et de carbone, ou de polyarylamide tel que du "KEVLAR", noyé dans une résine appropriée.

Ce cadre de rigidification 28 est préparé et fabriqué indépendamment, puis il est placé et positionné dans le moule utilisé pour le surmoulage du joint d'étanchéité 22. On fait ainsi l'économie de tout l'outillage spécifique qui était nécessaire à la fabrication et au soudage du cadre métallique de rigidification, ainsi que les problèmes liés à cette fabrication.

Par ailleurs, la plus grande rigidité du matériau composite permet de donner une forme essentiellement plane à ce cadre.

Dans la variante de réalisation représentée en figure 4, la cadre de rigidification 28 en matériau composite est surmoulé directement sur la face inférieure de la plaque de verre 12. Le joint d'étanchéité 22 peut ensuite être surmoulé sur la plaque 12 et le cadre 28, ou bien être rapporté et éventuellement collé sur ces derniers.

Le joint d'étanchéité 22 est de préférence en une matière moulable par le procédé RIM (réaction-injection-moulage) selon lequel les composants de la matière injectée sont mélangés entre eux dans la tête d'injection.

La figure 5 illustre schématiquement un procédé de fabrication de panneau de toit ouvrant selon l'invention.

Selon ce procédé, on positionne la plaque de verre 12 avec sa face inférieure 20 tournée vers le haut, on dépose sur la périphérie de cette plaque une couche de matière de protection contre les rayons ultra-violets, on pose ensuite au moins une et, de préférence, plusieurs couches 30 de tissu de fibres ou de fils de verre, de verre et de carbone, ou de polyarylamide du type KEVLAR, on recouvre toute la face 20 de la plaque 12 par une feuille 32 d'une matière synthétique transparente telle que du PVC, on fait le vide entre cette feuille 32 et la plaque de verre 12 et on injecte une résine polymérisable dans la zone où doit être formé le cadre de rigidification 28. La résine est injectée par aspiration et vient imprégner les couches de tissu de fils ou de fibres. La polymérisation de la résine se traduit par la formation et la fixation du cadre de rigidification 28 sur la périphérie de la plaque 12.

Ce procédé ne fait pas appel à un moule d'injection d'un type classique, qui est en général très coûteux. Il suffit d'utiliser une matrice de moulage, sur laquelle prend appui la plaque 12.

## Revendications

1. Panneau de toit ouvrant pour véhicule automobile, comprenant une plaque (12) de matière transparente telle que du verre par exemple, un cadre de rigidification monté sur le pourtour de cette plaque et un joint périphérique d'étanchéité, caractérisé en ce que le cadre de rigidification (28) est réalisé en matériau composite et est intégré ou noyé dans le joint d'étanchéité (22), au moins l'un de ces deux éléments (22, 28) étant surmoulé sur la périphérie de ladite plaque (12) de matière transparente.

2. Panneau selon la revendication 1, caractérisé en ce que le cadre de rigidification (28) en matériau composite est surmoulé sur la périphérie de la plaque (12) en matière transparente.

3. Panneau selon la revendication 1 ou 2, caractérisé en ce que le joint d'étanchéité (22) est surmoulé sur le cadre de rigidification et sur la périphérie de la plaque (12) de matière transparente.

4. Panneau selon l'une des revendications précédentes, caractérisé en ce que le matériau composite du cadre de rigidification (28) comprend un tissu noyé dans une résine, le tissu étant formé de fils ou de fibres de verre, d'un mélange de fils ou de fibres de verre et de carbone, ou de fils ou de fibres de polyarylamide.

5. Panneau selon la revendication 1 ou 2, caractérisé en ce que le joint d'étanchéité est rapporté et éventuellement collé sur la périphérie de la plaque (12) de matière transparente et sur le cadre de rigidification (28).

6. Procédé de fabrication d'un panneau de toit ouvrant pour véhicule automobile, caractérisé en ce qu'il consiste à disposer une ou plusieurs couches d'un tissu (30) de fils ou de fibres sur la périphérie d'une plaque (12) de matière transparente telle que du verre par exemple, à poser sur cette plaque et sur la ou les couches de tissu (30) une feuille (32) de matière plastique telle que du PVC, à faire le vide entre la plaque (12) et la feuille (32) et à injecter une matière plastique telle qu'une résine dans l'espace compris entre la feuille (32) et la plaque (12) au niveau de la ou des couches de tissu (30), pour former ainsi un cadre en matériau composite surmoulé sur la périphérie de la plaque (12).

## Patentansprüche

1. Schieber eines Schiebedaches für Kraftfahrzeuge, der eine Platte (12) aus einem transparentem Material wie z.B. Glas, einen Rahmen zur Versteifung, der über den Umfang dieser Platte montiert ist und eine umlaufende Dichtung umfaßt, dadurch gekennzeichnet, daß der Rahmen zur Versteifung (28) aus einem Verbundwerkstoff hergestellt ist und in die Dichtung (22) integriert oder in sie eingelassen ist, wobei mindestens einer der beiden Bestandteile (22, 28) entsprechend dem Umfang der besagten Platte (12) aus transparentem Material gegossen ist.

2. Schieber nach Anspruch 1, dadurch gekennzeichnet, daß der Rahmen zur Versteifung (28) aus einem Verbundwerkstoff entsprechend dem Umfang der Platte (12) aus transparentem Material gegossen ist.

3. Schieber nach Anspruch 1 oder 2, dadurch gekennzeichnet, daß die Dichtung (22) entsprechend dem Rahmen zur Versteifung und entsprechend dem Umfang der Platte (12) aus transparentem Material gegossen ist.

4. Schieber nach einem der vorhergehenden Ansprüche, dadurch gekennzeichnet, daß der Verbundwerkstoff des Rahmens zur Versteifung (28) aus einem Gewebe. das in ein Harz eingelassen ist, besteht, wobei das Gewebe aus Fäden oder Fasern aus Glas, einer Mischung von Fäden oder Fasern aus Glas und Kohlenstoff, oder aus Fäden oder Fasern aus Polyarylamid besteht.

5. Schieber nach Anspruch 1 oder 2, dadurch gekennzeichnet, daß die Dichtung mit dem Umfang der Platte (12) und mit dem Rahmen zur Versteifung (28) verbunden und unter Umständen mit transparentem Material angeklebt ist.

6. Verfahren zur Herstellung eines Schiebers eines Schiebedaches für Kraftfahrzeuge, dadurch gekennzeichnet, daß es darin besteht, eine oder mehrere Schichten eines Gewebes (30) aus Fäden oder Fasern entlang des Umfanges einer Platte (12) aus transparentem Material wie z.B. Glas anzubringen, auf diese Platte und die Gewebeschicht oder -schichten (30) eine Folie (32) aus Kunststoff wie z.B. PVC anzubringen, den Bereich zwischen der Platte (12) und der Folie (32) zu evakuieren und ein Plastikmaterial wie z.B. ein Harz in den Raum zwischen der Folie (32) und der Platte (12) in der Höhe der Gewebeschicht oder -schichten (30) einzuspritzen um auf diese Weise einem Rahmen aus einem Verbundwerkstoff entsprechend dem Umfang der Platte (12) zu bilden.

## Claims

1. An opening roof panel for a motor car, comprising a sheet (12) of transparent material such as glass, a rigidifying frame mounted around the edge of the said sheet and a peripheral sealing-tight gasket, characterised in that the rigidifying frame (28) is made from a composite material and is integrated into or embedded in the sealing-tight gasket (22), at least one of these two elements (20 to 28) being moulded around the periphery of the said sheet (12) of transparent material.

2. A panel according to Claim 1, characterised in that the rigidifying frame (28) of composite material is moulded around the periphery of the sheet (12) of transparent material.

3. A panel according to Claim 1 or 2, characterised in that the sealing-tight gasket (22) is mounted around the rigidifying frame and over the periphery of the sheet (12) of transparent material.

4. A panel according to one of the preceding Claims, characterised in that the composite material of the rigidifying frame (28) comprises a woven fabric embedded in a resin, the woven fabric being formed from glass threads or fibres, a mixture of glass and carbon threads and fibres or polyarylamide threads or fibres.

5. A panel according to Claim 1 or 2, characterised in that the sealing-tight gasket is attached and is possibly glued to the periphery of the sheet (12) of transparent material and onto the rigidifying frame (28).

6. A method of producing an opening roof panel for a motor car, characterised in that it consists of disposing one or a plurality of layers of a woven fabric (30) of threads or fibres onto the periphery of a sheet (12) of a transparent material such as glass for example, in fitting onto this sheet and onto the layer or layers of woven fabric (30) a sheet (32) of plastics material such as PVC, in establishing a vacuum between the sheet (12) and the sheet (32) and injecting a plastics material such as a resin into the space comprised between the sheet (32) and the sheet (12) at the level of the layer or layers of woven fabric (30) in order thus to form a frame of composite material moulded around the periphery of the sheet (12).
